(19) Europäisches Patentamt
European Patent Office
Office européen des brevets

(11) **EP 2 658 950 B1**

(12) **FASCICULE DE BREVET EUROPEEN**

(45) Date de publication et mention
de la délivrance du brevet:
**17.07.2019 Bulletin 2019/29**

(21) Numéro de dépôt: **11811059.2**

(22) Date de dépôt: **09.12.2011**

(51) Int Cl.:
*C10G 11/18* (2006.01)     *B01J 19/32* (2006.01)
*B01J 8/24* (2006.01)     *B01J 8/18* (2006.01)
*B01J 8/30* (2006.01)     *B01J 8/34* (2006.01)
*B01J 8/00* (2006.01)     *C10G 11/20* (2006.01)
*B01J 8/26* (2006.01)

(86) Numéro de dépôt international:
**PCT/FR2011/052912**

(87) Numéro de publication internationale:
**WO 2012/089952 (05.07.2012 Gazette 2012/27)**

(54) **PROCEDE DE CRAQUAGE CATALYTIQUE POUR LE TRAITEMENT D'UNE COUPE A FAIBLE CARBONE CONRADSON.**

KATALYTISCHES KRACKVERFAHREN ZUR BEHANDLUNG EINER FRAKTION MIT NIEDRIGEM GEHALT AN CONRADSON-KOHLENSTOFF

CATALYTIC CRACKING METHOD FOR TREATING A FRACTION HAVING A LOW AMOUNT OF CONRADSON CARBON

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.12.2010 FR 1061287**

(43) Date de publication de la demande:
**06.11.2013 Bulletin 2013/45**

(73) Titulaire: **Total Raffinage France**
**92400 Courbevoie (FR)**

(72) Inventeurs:
• **BORIES, Marc**
**F-76280 Saint Jouin de Bruneval (FR)**
• **LEROY, Patrick**
**F-76430 Saint Vigor d'Ymonville (FR)**

(74) Mandataire: **Fédit-Loriot**
**38, avenue Hoche**
**75008 France (FR)**

(56) Documents cités:
**EP-A1- 2 072 605     EP-A2- 0 850 687**
**FR-A1- 2 728 805**

**Description**

DOMAINE DE L'INVENTION

La présente invention se situe dans le domaine du craquage catalytique de coupes pétrolières, plus particulièrement de coupes présentant un faible niveau de carbon conradson et une forte teneur en hydrogène et qui, de ce fait, rendent difficile l'obtention du bilan thermique de l'unité.

Dans une unité de craquage catalytique (notée FCC), le bilan thermique est assuré par la combustion du coke déposé sur le catalyseur pendant l'étape de réaction. Cette combustion a lieu dans la zone de régénération. Typiquement, le catalyseur entre dans la zone de régénération avec une teneur en coke (définie comme la masse de coke sur la masse de catalyseur en pourcent poids) comprise entre 0,5 et 1 % poids et ressort de la dite zone avec une teneur en coke comprise entre 0,1 et 0,5 % poids pour des régénérateurs fonctionnant en combustion partielle ou comprise entre 0,1 et 0,05 % poids voire inférieure à 0,01 % poids pour des régénérateurs fonctionnant en combustion totale.

Dans une régénération à combustion totale, l'intégralité du coke est brûlée (teneur typique de CO ou monoxyde de carbone dans les fumées proche de zéro) alors qu'en combustion partielle, la combustion du coke produit du CO à hauteur de quelques pourcents volume, typiquement de 0,5 à 10% volume selon le débit d'air et le degré de d'achèvement de la combustion pour les combustions incomplètes.

La teneur en carbon conradson (ou CCR) de la charge est définie par la norme ASTM D 482 et représente pour l'Homme du métier une évaluation de la quantité de coke que la charge peut produire au cours de la réaction de craquage catalytique qui a lieu dans le réacteur principal de l'unité. En fonction de la teneur en carbone Conradson de la charge, il est possible de dimensionner l'unité pour un rendement en coke correspondant au craquage de la charge afin de satisfaire le bilan thermique de l'unité qui va commander son bon fonctionnement.

Les coupes lourdes conventionnelles traitées dans une unité de FCC ont généralement des carbon Conradson compris dans la fourchette 0,2 à 10 % poids.

Les coupes traitées dans une unité de FCC selon la présente invention peuvent avoir un carbone Conradson inférieur ou égal à 0,1 % poids et une teneur en hydrogène supérieure ou égale à 12,7 % poids.

EXAMEN DE L'ART ANTERIEUR

Il est connu de l'homme du métier pour équilibrer les bilans thermiques de pousser la combustion au régénérateur en y injectant plus d'air pour une quantité de coke donnée, c'est à dire diminuer le pourcentage volume de monoxyde de carbone (ou CO) dans les fumées, ce qui contribue à augmenter la température du catalyseur dans le dit régénérateur et doit aider à assurer le bilan thermique de l'unité. Cependant, il n'est pas nécessaire d'augmenter la quantité d'air injectée au-delà de la quantité nécessaire à la combustion du coke présent sur le catalyseur coké du lit dense dans le régénérateur. La combustion du coke permet d'augmenter la température du catalyseur ainsi régénéré jusqu'à la température souhaitée de craquage de la charge et ainsi d'équilibrer le bilan thermique de l'unité.

Lorsque l'augmentation de volume d'air injecté n'est pas suffisante ou possible, il est connu de l'art antérieur de recycler au niveau du régénérateur une coupe issue du FCC à fort potentiel de coke, dite coupe cokante, la dite coupe étant introduite directement dans le régénérateur. Cette coupe cokante est généralement une coupe issue du craquage de la charge qui est généralement la coupe "slurry", c'est à dire une coupe 360°C+ à dominante aromatique, ou toute coupe hydrocarbonée telle que du Fioul N°2 ou du Fuel domestique. Ce recyclage d'une coupe cokante dans le régénérateur, courant dans les phases de démarrage de l'unité est délicat, et est source de problèmes lors d'une utilisation en continu. En effet, comme les températures dans le régénérateur sont de l'ordre de 650°C à 750°C, une partie du recycle se vaporise en formant des gaz craqués qui vont se retrouver dans la phase diluée du régénérateur où ils risquent ainsi de créer des points chauds dommageables au bon fonctionnement du régénérateur. Ce phénomène souvent appelé "afterburning" ou post combustion, peut se définir comme une reprise de combustion en un point non souhaité du régénérateur, par exemple en phase diluée où le catalyseur solide est présent en plus faible quantité, ou en entrée ou à l'intérieur d'un des cyclones également présents dans l'enceinte du régénérateur, ou encore dans les conduites d'évacuation des gaz de combustion. On conservera dans la suite du texte le terme d'"afterburning" bien admis et pratiqué par l'homme du métier.

Par ailleurs, ce flux de recycle risque de brûler dans le lit de catalyseur en formant localement un front de flamme à haute température. Ce front de flamme est générateur de points chauds avec des températures localement fortes au sein du lit de catalyseur. Comme de la vapeur d'eau se forme également au moment de la combustion de ces hydrocarbures, ces fortes températures locales combinées à la présence de vapeur d'eau fragilisent la partie active du catalyseur (zéolithe) et désactivent ainsi sa fonction craquante. On parle de désactivation hydrothermale du catalyseur. On remarque que plus cette coupe recyclée est riche en hydrogène (plus la coupe sera légère, plus sa teneur en hydrogène sera importante générant plus de vapeur d'eau par combustion), plus la génération de vapeur d'eau résultant de sa combustion sera élevée.

Il est également connu de recycler des hydrocarbures types goudron ou coke au stripeur pour soit optimiser la production d'essence et d'oléfines par l'utilisation de catalyseurs bi-fonctionnel avec recycle d'hydrocarbures (US3856659) soit encore utiliser l'exothermicité du recycle afin d'améliorer le stripage des grains de catalyseurs cokés dans le stripeur (US4888103). Dans aucun de ces documents, il n'est évoqué l'optimisation de la réaction de cokage sur le catalyseur initialement coké par la charge, en vue de traiter des charges peu cokantes qui ne permettent pas d'obtenir l'équilibre thermique nécessaire au bon fonctionnement du procédé de craquage catalytique.

Dans le brevet EP2072605, on utilise le régénérateur comme un générateur de gaz de synthèse : dans ce but, on recycle une quantité de coupe cokante sur le catalyseur coké par la charge au stripeur. Cependant cette quantité est très supérieure à celle nécessaire au fonctionnement normal d'un régénérateur en combustion permettant de maintenir la température du catalyseur régénéré sortant entre 690 et 750°C, température permettant d'assurer l'équilibre thermique de l'unité de craquage catalytique. Pour consommer le coke formé en excès par le recycle et limiter la production de $CO_2$, on injecte dans le régénérateur non seulement de l'oxygène via l'air mais aussi de la vapeur d'eau pour former le gaz de synthèse en consommant le coke. La réaction de gazéification étant très endothermique, il n'y a pas d'augmentation de la température au-delà du seuil critique. Dans ce document, le procédé FCC est considéré comme un moyen d'éliminer le $CO_2$ dégagé au niveau du régénérateur.

La présente invention vise donc le craquage catalytique d'une coupe peu cokante comprenant le recyclage d'au moins une coupe cokante permettant d'augmenter la quantité de coke sur le catalyseur avant son entrée dans le régénérateur fonctionnant en mode combustion, mais permettant aussi d'éviter la formation de points chauds dans la phase diluée du lit fluidisé (afterburning) et de désactiver le catalyseur (points chauds en phase dense au sein du régénérateur ou du stripeur), le recycle se faisant sur une zone de distribution homogène des grains de catalyseur coké.

Un autre objectif de la présente invention est d'éviter le phénomène d'"afterburning" et de vapeur d'eau précédemment décrit qui se produit au régénérateur en limitant la quantité d'hydrocarbures légers riches en hydrogène qui pourraient avoir été entraînés dans le coke.

## DESCRIPTION SOMMAIRE DE L'INVENTION

La présente invention s'applique aussi bien à des unités de FCC utilisant un réacteur fonctionnant à courant ascendant (appelé "riser" dans la terminologie anglo-saxonne), qu'à des unités utilisant un réacteur fonctionnant à courant descendant (appelé "downer" dans la terminologie anglo-saxonne), mais toujours à des unités dont le régénérateur fonctionne en mode combustion.

La présente invention s'applique également à des unités FCC fonctionnant avec un seul réacteur (en écoulement ascendant ou en écoulement descendant), et à des unités FCC fonctionnant avec deux réacteurs ou plus. Généralement, lorsque les unités FCC fonctionnent avec deux réacteurs, un principal et un secondaire, qu'ils fonctionnent en maxi essence ou en maxi LCO, ces réacteurs sont à écoulement ascendant, mais une unité qui ferait appel à deux réacteurs à écoulement descendant ou à un réacteur ascendant et un réacteur descendant ne sortirait pas du cadre de la présente invention.

Les charges que peut traiter une unité de FCC selon la présente invention sont des charges à carbon Conradson inférieur ou égal à 0,1% poids et ayant une teneur en hydrogène supérieure ou égale à 12,7% poids.

La présente invention peut se décrire comme un procédé de craquage catalytique d'une charge faiblement cokante de carbone Conradson inférieur ou égal à 0,1 % poids et de teneur en hydrogène supérieure ou égale à 12,7 % poids comprenant au moins une étape de craquage pour la charge, une étape de séparation/ stripage des effluents des grains de catalyseur cokés,une étape de régénération des dits grains par combustion partielle ou totale du coke, et le recycle d'au moins un effluent hydrocarboné dit cokant sur du catalyseur distribué de façon homogène et faiblement coké par la dite charge, avant régénération, la caractéristique du procédé étant que la quantité d'effluent cokant injectée sur le catalyseur coké est ajustée pour fournir une quantité de coke $Q_r$ supplémentaire sur le catalyseur et satisfaire à l'équation (I) suivante :

$$Q_t = Q_i + Q_r \ (I),$$

où Qi est la teneur en coke initiale sur le catalyseur coké après craquage de la charge et Qt ou Delta coke est la teneur en coke brûlé par combustion totale ou partielle, nécessaire au maintien du bilan thermique du procédé et de la température du catalyseur régénéré à une température supérieure ou égale à 690°C, de préférence variant de 690°C à 750°C, ledit effluent cokant comprenant une teneur en composés aromatiques supérieure ou égale à 50% en poids, comprenant 20% ou plus en poids de composés poly-aromatiques, encore appelé dans la suite de la présente description « coupe cokante ».

Par composé poly-aromatique, on entend un composé comprenant au moins deux cycles aromatiques avec deux atomes de carbone vicinaux communs.

Un catalyseur faiblement coké est un catalyseur dont la quantité de coke obtenu par craquage d'une charge n'est pas suffisamment importante pour assurer le bilan thermique de l'unité de craquage catalytique dans lequel il est utilisé. En effet, la régénération du catalyseur par combustion du coke dégage de la chaleur qui doit être récupérée en quantité suffisante par le catalyseur pour que ce dernier apporte d'une part l'énergie suffisante à la vaporisation quasi complète de la charge injectée sous forme liquide à l'entrée du réacteur et apporte d'autre part l'énergie suffisante aux réactions de craquage globalement endothermiques afin d'assurer une température de réaction en sortie dudit réacteur généralement comprise entre 480 et 650°C selon les configurations et les objectifs de conversion recherchés.

L'avantage de la présente invention est essentiellement d'augmenter la quantité de coke qui se dépose sur les grains de catalyseur de manière homogène avant leur entrée dans le régénérateur de l'unité. Cette augmentation du coke (ou delta coke) à brûler dans le régénérateur a pour effet d'augmenter la chaleur résultant de la combustion du coke et conséquemment d'augmenter de façon homogène la température des grains de catalyseur ainsi régénérés qui vont être recyclés au réacteur principal sans créer de points chauds néfastes à l'activité catalytique. L'avantage ultime est que lorsque les charges introduites dans le réacteur principal ne forment pas suffisamment de coke au craquage, le recycle d'effluent hydrocarboné cokant permet d'ajuster la quantité de coke ou delta coke nécessaire à l'équilibre thermique de l'unité, c'est-à-dire d'ajuster la température de sortie du catalyseur régénéré, et d'assurer ainsi son bon fonctionnement, même lorsque des charges peu cokantes sont craquées.

Pour un bon fonctionnement de l'unité de FCC alimentée avec une charge peu cokante, la quantité de coke ($Q_t$) présent sur le catalyseur entrant dans le régénérateur, nécessaire à l'équilibrage du bilan thermique devra correspondre à la somme de la quantité initiale de coke amenée par le craquage de la charge ($Q_i$) sur le catalyseur (dans le(s) réacteur(s) principal(aux)) et de la quantité supplémentaire de coke apportée par recyclage de l'effluent ($Q_r$) sur le catalyseur coké après craquage de la charge. Généralement, $Q_t$, la quantité de coke piégée sur le catalyseur, ou « Delta coke », entrant dans le régénérateur, typique pour un bilan thermique équilibré pourra varier entre 0.5 et 1.4 % en poids (bornes incluses). Pour atteindre l'équilibre thermique, c'est-à-dire une température du catalyseur régénéré qui rencontrera la charge, supérieure ou égale à 690°C (variant par exemple de 690 à 750°C), il faudra ajuster la quantité d'air injectée au régénérateur à la quantité de coke formée.

De façon préférentielle, $Q_t$ est maintenue entre 0,5 et 1,1 % poids (bornes incluses) lorsque la combustion se fait dans un régénérateur à combustion totale avec un seul étage, et entre 0,8 et 1,4 % poids (bornes incluses) pour une combustion partielle dans un premier étage d'un régénérateur multi-étagé comprenant au moins deux étages de régénération.

Pour mettre en oeuvre l'invention, l'effluent hydrocarboné de teneur aromatique supérieure ou égale à 50% en poids, comprenant 20% en poids ou plus de composés poly-aromatiques, dit encore coupe cokante dans la suite de la présente description, est un effluent carboné et/ou hydrocarboné dont la température d'ébullition est supérieure ou égale à 220°C et préférentiellement supérieure ou égale à 340°C, à dominante aromatique, comme les coupes LCO (abréviation de light cycle oil), du HCO (abréviation de Heavy Cycle Oil) d'intervalle de distillation compris typiquement entre 360 et 440°C, et « slurry » (boue résiduelle de craquage catalytique) d'intervalle de distillation supérieur ou égal à 360°C ou 360°C+, les coupes de produits finis de type fuel lourd tel que le Fioul N°2, les coupes intermédiaires issues de la distillation atmosphérique ou de la distillation sous vide comme les résidus de distillation, ou encore des coupes très aromatiques issues de la conversion du pétrole brut, la biomasse issue de la conversion du bois et/ou de la cellulose, du coke de pétrole ou de biomasse broyé, dispersé ou pulvérisé dans un fluide par dilution ou soufflage, les coupes riches en asphalte provenant d'unités de désalphatage, les cires issues de la liquéfaction du charbon par voie indirecte (GTL) ou du procédé Fischer Tropsch de transformation du gaz en hydrocarbures, le coke de pétrole ou un mélange des dites coupes.

Parmi les charges faiblement cokantes qu'il est possible de traiter selon la présente invention, on peut trouver :

- les purges d'unité d'hydrocraqueur, dénommées "bleed" dans la terminologie anglo-saxonne, présentant une teneur en hydrogène supérieure ou égale à 12,7 % poids car fortement paraffiniques,
- les charges VGO (abréviation de gasoil sous vide) résultant de la distillation sous vide des résidus de distillation atmosphérique prétraitées sévèrement, ayant un point d'ébullition supérieur ou égal à 350°C, et présentant des teneurs en hydrogène supérieures ou égales à 12,7 % poids,
- les huiles végétales,
- les paraffines issues du procédé Fischer Tropsch,

ces charges pouvant être craquées seules ou en mélange dans le réacteur principal et/ou secondaire de l'unité de craquage catalytique.

Dans la présente invention, il s'agit de produire des effluents comme par exemple l'essence à partir d'une charge à carbon Conradson inférieur ou égal à 0,1 % poids et à teneur en hydrogène supérieure ou égale à 12,7 % en poids, par craquage catalytique (FCC), l'unité correspondante possédant au moins un réacteur principal fonctionnant à courant ascendant (appelé "riser") ou à courant descendant (appelé "downer"), le catalyseur coké en sortie du réacteur étant introduit dans une zone de séparation/ stripage dans lequel le catalyseur coké est séparé des effluents de craquage, puis récupéré à l'étape de stripage, dans le stripeur de l'unité. La dite étape de stripage fonctionnant en lit fluidisé et présentant une phase dense surmontée d'une phase diluée, le recycle d'effluents hydrocarbonés ou coupe cokante, est effectué dans au moins une zone dite de recycle au moyen d'au moins un dispositif de dispersion au sein de la phase dense du stripeur. Cependant, pour que cette diffusion soit optimale et qu'il n'y ait pas de points chauds avec des risques de sur-cokage pouvant occasionner des points chauds ultérieurement au moment de la combustion dans le régénérateur, la phase dense de catalyseur correspondant à la zone de recycle de l'effluent cokant est rendue homogène par insertion d'au moins un élément de garnissage structuré améliorant la dispersion des grains de catalyseurs cokés situé en amont de la dispersion du recycle par rapport au flux de grains de catalyseur et évitant le départ de particules de coke en formation en même temps que les effluents de craquage. Ces éléments de garnissage structuré peuvent couvrir tout ou partie de la section de la dite zone de stripage et sur au moins une partie de la hauteur de celle-ci, de façon étagée ou non, au moins en amont et éventuellement en aval de l'injection d'au moins une coupe cokante.

Selon une première variante de la présente invention, l'étape de stripage comprendra au moins deux zones comprenant au moins une première zone de cokage du recycle occupée par au moins un premier élément de garnissage structuré situé en amont de la dispersion du recycle de coupe cokante et au moins une seconde zone de stripage occupée par au moins un deuxième élément de garnissage structuré situé en aval de l'arrivée du dit recycle mais en amont de la dispersion des fluides de stripage nécessaire à l'évacuation des effluents de craquage. Dans chacune des zones, on peut avoir une superposition d'éléments de garnissage en fonction de l'homogénéité souhaitée du catalyseur. On ne sortirait pas du cadre de l'invention, si la coupe cokante était recyclée en au moins deux zones, ces deux zones étant équipées par deux superpositions d'éléments de garnissage structuré distincts, chacune de ces zones comprenant des dispositifs de dispersion de coupe cokante en aval du flux des grains de catalyseur, ces zones étant toujours suivies d'une troisième zone dite de stripage correspondant à une troisième superposition d'éléments de garnissage associée à un dispositif de dispersion du fluide de stripage.

Dans le cadre de l'invention, selon une deuxième variante, les zones de recycle de coupes cokantes peuvent être séparées par des zones de stripage, par exemple une ou plusieurs zone(s) de recycle puis une zone de stripage. Dans cette succession de zones de recycle et de stripage, la dernière zone est toujours une zone de stripage.

L'emploi d'éléments de garnissage structuré permet d'assurer un flux de catalyseur continu de densité homogène. Dans un mode préféré, ces garnissages occupent moins de 10% de la surface de la section de passage de la capacité dans laquelle ils sont placés, bien qu'en projection sur celle-ci ils couvrent toute la surface.

On entend par fluide de stripage tout composé non hydrocarboné à l'état gazeux au moment de son injection dans le stripeur choisi parmi les gaz inertes et la vapeur d'eau. Ils assurent l'aérage des grains de catalyseur mais également permettent l'élimination des hydrocarbures piégés dans le lit et/ou les grains, ce qui a pour incidence d'augmenter l'activité catalytique de ces grains.

Dans un mode préféré de l'invention, une zone de pré-stripage occupée par au moins un élément de garnissage structuré associé à un dispositif de dispersion d'au moins un fluide de stripage en aval du flux des grains est disposé en amont de la première zone de recycle. L'ajout de cette zone de pré-stripage contribue ainsi à restaurer une partie non négligeable de son activité catalytique au catalyseur et donc de sa capacité à coker dans le stripeur.

La présente invention a également pour objet un dispositif de mise en oeuvre de l'invention comprenant les différentes capacités nécessaires à la mise en oeuvre d'un procédé de craquage catalytique, c'est-à-dire, au moins un réacteur principal et éventuellement au moins un réacteur secondaire, au moins un désengageur et un stripeur, un régénérateur mono ou multi-étagé, le dit dispositif comprenant dans la partie stripeur, au niveau du lit dense de catalyseur, au moins une zone équipée d'au moins un élément de garnissage structuré disposé en amont du dispositif de dispersion de la coupe cokante par rapport à la circulation du flux des grains de catalyseur et ces éléments de garnissage structuré étant formés par un enchevêtrement de plaques, de ruban ou d'ailettes constituant un tamis, ce tamis occupant moins de 10% de la surface de la section de passage dans la capacité dans laquelle il est placé, mais recouvrant en projection sur celle-ci toute sa surface.

De préférence, la partie stripeur du dispositif contiendra au moins deux zones équipées d'éléments de garnissage structuré associés à deux dispositifs de dispersion de fluides, l'un pour la dispersion de coupes cokantes, l'autre pour la dispersion du fluide de stripage, ces dispositifs étant situés en aval des dits éléments de garnissage par rapport au flux des grains de catalyseur.

Dans une variante, plusieurs superpositions d'éléments de garnissage chacun associé à un dispositif de dispersion d'une coupe cokante, peuvent se succéder avec au moins un élément de garnissage associé à un dispositif de dispersion du fluide de stripage dans une même étape de stripage.

Comme élément de garnissage, on pourrait utiliser un ou plusieurs des éléments de garnissage structuré décrits ici par référence dans les brevets EP719850, US7022221, US7077997, WO2007/094771, WO00/35575 et CN1763150. Il s'agit ici dans chacun des garnissages envisagés d'aérer le flux de grains cokés en leur faisant suivre des chemins privilégiés obtenus par un enchevêtrement de plaques, de ruban ou d'ailettes constituant un tamis. Ce tamis peut occuper moins de 10% de la surface de la section de passage de la capacité dans laquelle il est placé, et recouvrir en projection sur celle-ci, toute la surface. Ces enchevêtrements sont disposés généralement en couches de même type, permettant de contrôler cet aérage des grains.

Comme dispositifs de dispersion du recycle ou des fluides de stripage, on peut choisir parmi les injecteurs à cannes pulvérisant, les anneaux et les tubes d'aspersion (sparger en anglais).

Pour l'injection de coupes lourdes, il est préféré d'utiliser des injecteurs par exemple de type venturi, qui, grâce à une co-injection sous pression d'un fluide de dispersion, généralement de la vapeur, permettent d'atomiser le fluide de recycle afin d'en accélérer sa vaporisation immédiatement après son injection.

Dans une première variante du dit dispositif, le stripeur peut être situé dans la même capacité que le désengageur.

Dans une seconde variante, le stripeur peut être situé dans une capacité distincte du désengageur, située en aval de celui-ci, mais toujours disposée en amont du régénérateur. Dans une forme préférée du dispositif, le désengageur et/ou le stripeur comprendra avantageusement au niveau de la sortie et/ou de l'entrée des grains de catalyseur au moins un élément de garnissage structuré suivi d'un dispositif de dispersion de fluides de stripage pour le pré-stripage des grains de catalyseur. En outre, la capacité de stripage comprendra des moyens d'évacuation des effluents de craquage résultant essentiellement du recycle des coupes cokantes sur le catalyseur coké dans la dite capacité.

Lorsque le stripeur comprend une pluralité de garnissages pour le recycle et le stripage intercalés, comprenant chacun des dispositifs de dispersion de fluides de recycle et de stripage, les volumes occupés pour le recycle et le stripage sont respectivement de 25 à 65% et de 35 à 75% du volume de la zone ou de la capacité correspondant à l'étape de stripage.

## DESCRIPTION DETAILLEE DE L'INVENTION

L'invention est maintenant décrite en référence aux dessins annexés, non limitatifs, dans lesquels :

- la figure 1 est une coupe d'un désengageur-stripeur dans une capacité unique
- la figure 2 est un schéma représentant une unité de craquage catalytique avec deux réacteurs de craquage, un primaire et un secondaire, pour laquelle la capacité de stripage est indépendante de la capacité de désengagement du mélange catalyseur coké/effluents de craquage.
- La figure 3 représente en coupe deux modes de remplissage des capacités de stripage avec des garnissages structurés associés chacun à un dispositif de dispersion en aval.

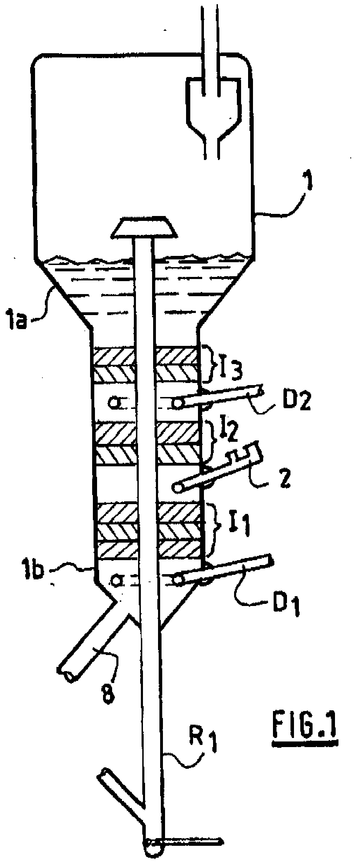

La figure 1 représente un mode de réalisation de la partie réacteur/ stripeur du dispositif de mise en oeuvre de l'invention : il comprend un réacteur ascendant (R1) équipé en son extrémité supérieure par le désengageur /stripeur (1) unique comprenant la partie désengageur (1a) et la partie stripeur (1b) dans la même capacité. Cette partie du stripeur est équipée de trois garnissages composés de plusieurs éléments structurés ($I_1$, $I_2$ et $I_3$). Le flux de grains de catalyseur circulant de haut en bas, en aval de chaque garnissage sont disposés soit des anneaux de dispersion de vapeur pour le stripage des grains de catalyseur ($D_1$ et $D_2$) soit un injecteur de recycle de composés hydrocarbonés (2). La conduite (8) relie le désengageur/strippeur (1) à un régénérateur (non représenté).

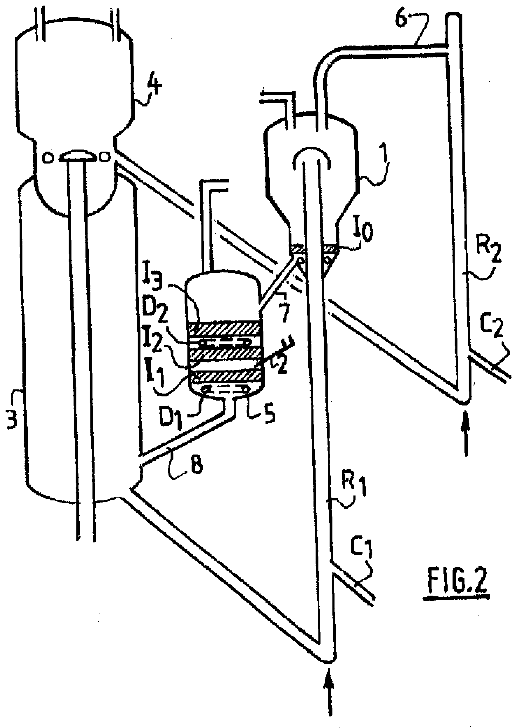

La figure 2 représente la totalité d'une unité de FCC mettant en oeuvre le procédé de l'invention selon un mode particulier. L'unité telle que représentée comprend deux réacteurs ($R_1$ principal et $R_2$) tous deux alimentés par une charge ($C_1$, $C_2$, $C_1$ étant une charge selon la présente invention). Les effluents et les catalyseurs cokés par les charges dans les deux réacteurs ascendants sont rassemblés dans un même désengageur (1). L'unité comprend également un stripeur (5) distinct et indépendant, relié au désengageur (1) par la conduite (7), et au régénérateur à double étage (3 et 4) par la conduite (8). Le stripeur (5) est équipé de trois garnissages composés de plusieurs éléments structurés ($I_1$, $I_2$ et $I_3$). Au sein du stripeur (5), le flux de grains de catalyseur circulant de haut en bas, en aval de chaque garnissage sont introduits soit des anneaux de dispersion de vapeur pour le stripage des grains de catalyseur ($D_1$ et $D_2$) soit un injecteur de recycle de composés hydrocarbonés (2).

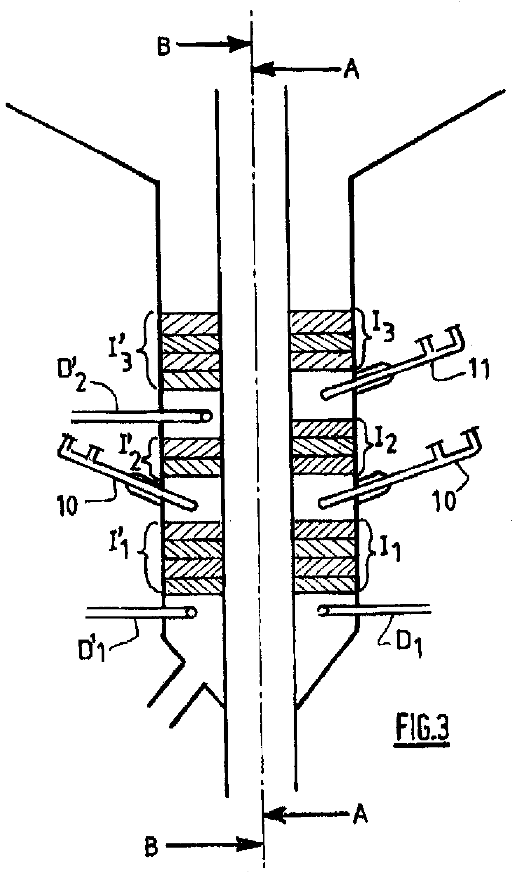

La figure 3 représente deux modes de remplissage selon les coupes A-A et B-B du stripeur par des garnissages composés d'un nombre non identique d'éléments structurés. Dans ces deux coupes, le flux de grains de catalyseur circule de haut en bas. Selon la coupe A-A, deux garnissages successifs ($I_2$) et ($I_3$) avec injection d'un recycle d'hydrocarbures (10) et (11) via un injecteur, et un garnissage $I_1$ pour le stripage des grains par dispersion de vapeur via l'anneau de dispersion $D_1$. Selon la coupe B-B, le stripeur est équipé de trois garnissages composés de plusieurs éléments structurés, deux étapes de stripage correspondant aux garnissages ($I'_2$) et ($I'_3$) et aux anneaux de dispersion ($D'_1$) et ($D'_2$) encadrent une étape de cokage comprenant le recycle d'hydrocarbure via l'injecteur (10) et le garnissage ($I'_2$).

Les exemples comme les figures décrites ci-dessus visent à décrire l'invention sans en limiter la portée.

## EXEMPLE 1

Le présent exemple montre les avantages de la présente invention en comparant l'efficacité en rendement de produits lorsqu'on craque des charges faiblement cokantes dans une unité de FCC avec ou sans recycle de coupes cokantes.

On distingue un cas de base sans recycle avec une unité de craquage catalytique (FCC) à un seul réacteur ascendant ou "riser" d'une capacité de 40 000 barils par jour, soit 240 tonnes par heure, et traitant une charge correspondant du VGO hydrotraité.

Les propriétés principales de la charge sont présentées dans le tableau 1 ci-dessous.

Tableau 1

| Charge | | VGO hydrotraité |
|---|---|---|
| Densité | g/cm$^3$ | 0,8610 |
| Teneur en H2 | %poids | 13.5 |
| Soufre | ppm poids | 330 |
| Azote | ppm poids | 550 |
| CCR (Carbon Conradson) | | <0,1 |
| Ni | ppm poids | <2 |
| V | ppm poids | <2 |

Cette unité sans recycle de coupe "cokante" dans le stripeur est opérée dans les conditions présentées dans le tableau 2.

Tableau 2

| C/O | 8,6 |
|---|---|
| Température sortie riser, °C | 525 |
| delta coke % poids | 0,60 |
| Température du régénérateur, °C | 671 |

La température de régénération est trop faible, ce qui peut causer des réactions d'afterburning ou post combustion du coke qui n'est qu'incomplètement brûlé. En effet, des combustions complémentaires peuvent se produire dans la phase diluée du lit fluidisé dans le régénérateur, par combustion du coke particulaire entraîné suite à la combustion incomplète dans la phase dense de celui-ci. Pour obtenir une combustion complète, la température de régénération optimale requise pour éviter de tels phénomènes est généralement supérieure ou égale à 690°C.

La structure de rendement associée, c'est-à-dire les quantités de produits obtenus par craquage de la charge, est fournie dans le tableau 3.

Tableau 3

| Rendement par rapport à la charge | % poids |
|---|---|
| Gaz secs | 1,98 |
| LPG C3/C4 | 22,81 |
| Essence C5-220°C | 56,50 |
| LCO (220- 360°C) | 9,53 |
| > 360°C | 3,98 |
| Coke | 5,22 |

Dans le second cas, on recycle une coupe "slurry" issue de l'unité elle-même, comme il est décrit dans la figure 1, dans la phase dense du stripeur (1b), via 4 dispositifs de dispersion (2) disposés de manière équidistante en aval d'un premier garnissage ($I_2$) comprenant plusieurs éléments structurés permettant d'homogénéiser le flux des grains de catalyseur descendants et d'obtenir un bon contact entre ceux-ci et le slurry recyclé, et ainsi un dépôt bien homogène de coke additionnel sur le catalyseur. Le positionnement des dispositifs de dispersion dans le stripeur en aval du garnissage auquel ils sont associés est choisi de telle façon que le temps de contact global entre le slurry et les grains de catalyseurs soit de 70 secondes pour une vitesse de descente des grains de catalyseur de 65 kg/m$^2$/s.

Un deuxième garnissage ($I_3$) est situé dans la partie inférieure de la phase dense du stripeur (la) associé à un dispositif de dispersion d'un fluide de stripage ($D_1$), ici de la vapeur d'eau : la dispersion de vapeur d'eau permet de stripper les produits légers chargés en atomes d'hydrogène issus du craquage de la coupe cokante. Ces hydrocarbures légers seront récupérés et mélangés aux effluents du réacteur ($R_1$) pour être ensuite distillés puis enfin valorisés dans la raffinerie. De cette manière, le coke ($Q_r$) résultant du cokage des hydrocarbures lourds poly-condensés ou poly-aromatiques peu riches en hydrogène, s'ajoute au coke ($Q_i$) résultant du craquage de la charge dans le réacteur ($R_1$) pour constituer la quantité de coke (Qt) nécessaire au bilan thermique de l'unité, avant d'être envoyé au régénérateur. Comme ce coke additionnel est dépourvu d'un excès d'hydrogène du fait du stripage postérieur à la réaction de craquage, les risques d'apparition de points chauds néfastes au catalyseur lié à la combustion de l'hydrogène ainsi qu'une production excessive de vapeur d'eau dans le régénérateur seront évités.

Un troisième garnissage ($I_1$) associé avec un dispositif de dispersion de fluide de stripage ($D_2$), essentiellement de la vapeur d'eau, est disposé en amont du premier garnissage ($I_2$) dans la phase dense du stripeur (la) pour assurer un pré-stripage des grains de catalyseur avant qu'ils rencontrent la dite coupe cokante et contribuent ainsi à restaurer une partie non négligeable de l'activité catalytique et donc du pouvoir cokant des dits grains de catalyseur. Le positionnement des dispositifs de dispersion de vapeur correspond à celui des dispositifs de dispersion de la coupe cokante : le temps de contact global entre le fluide de stripage et les grains de catalyseurs visé est de 70 secondes pour une vitesse de descente des grains de catalyseur de 65 kg/m$^2$/s.

Dans le tableau 4 ci-dessous sont rassemblés les rendements obtenus pour le recyclage d'un slurry dans une phase dense de grains de catalyseur dans le stripeur lorsqu'il y a :

- Etat 1 ; ni stripage préalable (ou pré-stripage $I_3$ +$D_2$), ni garnissage en amont du recycle, mais un stripage terminal ($I_1$ +$D_1$)
- Etat 2 ; pas de pré-stripage ($I_3$ +$D_2$), un garnissage ($I_2$) en amont du dispositif de dispersion (2) pour le recycle de slurry et enfin un stripage terminal ($I_1$ +$D_1$).
- Etat 3 ; un pré-stripage ($I_3$ + $D_2$), suivi du recycle de slurry ($I_2$ +2) et enfin un stripage terminal ($I_1$ +$D_1$).

Tableau 4

| Rendement par rapport à la charge | Etat 1 | Etat 2 | Etat 3 |
|---|---|---|---|
| Gaz secs (% poids) | 1.94 | 2,32 | 2,44 |
| LPG C3/C4 (% poids) | 2,44 | 3,18 | 3,66 |
| Essence C5-220°C (% poids) | 11,87 | 13,89 | 14,93 |
| LCO (220- 360°C) (% poids) | 29,00 | 28,62 | 28,09 |
| Slurry > 360°C (% poids) | 39,54 | 33,13 | 31,40 |
| Coke (% poids) | 15,09 | 18,86 | 19,81 |

Dans ce tableau on observe que l'introduction d'un garnissage comprenant des éléments structurés en amont du recycle de slurry permet d'augmenter la quantité de coke qui sera déposée sur le catalyseur, et que l'ajout d'une étape de pré-stripage du catalyseur avant la mise en contact avec la coupe cokante permet d'augmenter encore davantage le craquage et l'effet cokant de cette coupe.

Pour illustrer l'apport de l'invention, le tableau 5 montre, pour l'unité considérée, les gains au niveau de la quantité de coke déposée sur le catalyseur (Qt), ou encore delta coke, ainsi que l'augmentation correspondante de la température de la phase dense dans le régénérateur pour un débit de coupe cokante recyclée au stripeur de 6 t/h.

Tableau 5

| | Etat 1 | Etat 2 | Etat 3 |
|---|---|---|---|
| Température régénérateur (°C) | 680 | 686 | 691 |
| Delta coke (% poids) | 0,63 | 0,66 | 0,68 |

(suite)

|  | Etat 1 | Etat 2 | Etat 3 |
|---|---|---|---|
| C/O (poids/poids) | 8,2 | 7,9 | 7,7 |

Ainsi, en fonction de la configuration envisagée pour le recycle de la coupe cokante au stripeur et donc de la quantité résultante de coke (voir Tableau 4) déposée sur le catalyseur, la température au sein du régénérateur augmente de 671°C pour la configuration sans recycle à 691°C pour la configuration dite Etat 3 et de limiter ainsi les phénomènes d'afterburning liés à des températures de phase dense trop faibles typiquement inférieures à 690°C.

EXEMPLE 2

Le présent exemple montre l'intérêt de la présente invention pour permettre d'équilibrer le bilan thermique d'une unité de craquage catalytique en déficit de coke dans le régénérateur fonctionnant en mode combustion par craquage d'une charge peu cokante.

Dans cet exemple, l'unité de craquage catalytique a une capacité de 340 t/h et traite une charge très paraffinique issue d'un hydrocraqueur. Cette charge présente une densité de 0.86, un Carbon Conradson déterminé par la norme ASTM D 482, inférieur à 0.1% poids et une teneur en métaux (Nickel + Vanadium) inférieure 0.1ppm.

Dans le tableau 6 ci-après, la première colonne rassemble les caractéristiques de cette unité traitant la dite charge sans aucun recycle d'hydrocarbures lourds dans le stripper. En calculant le bilan thermique de l'unité, on obtient une très faible quantité de coke sur le catalyseur de 0.4% en poids, ce qui conduit à une température très faible pour la phase dense du lit fluidisé dans le régénérateur, à peine supérieure à 640°C. Une augmentation de l'injection d'air au-delà de la quantité mentionnée ne permet pas d'augmenter cette température au-delà de ce seuil.

Pour remonter la température du catalyseur, on effectue un recycle d'hydrocarbure lourd, en l'occurrence du slurry (350+), dont la densité est de 1.083 et dont le carbon Conradson est supérieur à 10% poids, issu du fond de la colonne de fractionnement primaire de l'unité de craquage catalytique. Ce recycle consiste à injecter ledit hydrocarbure lourd dans le stripper au niveau des inserts divisant les grains de catalyseur cokés par la charge. Les résultats du bilan thermique sont consignés dans la deuxième colonne du tableau 6.

On constate qu'en recyclant 20t/h de slurry vers le stripper, la quantité de coke déposée sur le catalyseur par craquage augmente de manière significative, ce qui permet alors d'obtenir une température de phase dense tout à fait satisfaisante pour assurer la combustion du coke sur le catalyseur par injection d'une quantité raisonnable d'air.

On observe dans ce cas que la teneur en Hydrogène du coke augmente légèrement en raison de l'adsorption de molécules lourdes sur le catalyseur dans le stripper dont le ratio moléculaire H/C (hydrogène/carbone) est supérieur à celui du coke initialement déposé sur le catalyseur suite au craquage de la charge dans le réacteur. Cette augmentation d'hydrogène dans le coke est ici souhaitée car la combustion de cet hydrogène supplémentaire contribue à augmenter la température de la phase dense du lit fluidisé dans le régénérateur.

Tableau 6

|  |  | Sans recycle | Avec Recycle |
|---|---|---|---|
| Débit charge | t/h | 340 | 340 |
| Débit recycle HC lourd | t/h | 0 | 20 |
| Température préchauffe | °C | 250 | 250 |
| Température réaction | °C | 518 | 518 |
| C/O | % poids | 9,5 | 6,8 |
| Delta coke (Qt) | -- | 0,51 | 0,72 |
| H dans coke | % poids | 6,94 | 7,35 |
| **Température phase dense** | **°C** | **642** | **694** |
| Débit air injecté | t/h | 229 | 247 |

D'après le tableau 6, on constate que la quantité de coke augmente sur le catalyseur (Qt variant de 0,51 à 0,72) et que la température trop basse de l'unité sans recycle est augmentée jusqu'à plus de 690°C, ceci assurant le rééquilibrage du bilan thermique de l'unité.

**Revendications**

1. Procédé de craquage catalytique à lit fluidisé d'une charge faiblement cokante de carbone Conradson inférieur ou égal à 0,1% poids et de teneur en hydrogène supérieure ou égale à 12,7% poids comprenant au moins une étape de craquage de la charge en présence d'un catalyseur, une étape de séparation/stripage des effluents des grains de catalyseur cokés et une étape de régénération des dits grains par combustion partielle ou totale du coke, et le recycle sur du catalyseur distribué de façon homogène et faiblement coké, avant régénération, d'au moins un effluent carboné et/ou hydrocarboné dit cokant, le procédé étant **caractérisé en ce que** la quantité d'effluent cokant injectée sur le catalyseur coké est ajustée pour fournir une quantité de coke $Q_r$ supplémentaire sur le catalyseur et satisfaire à l'équation (I) suivante :

$$Q_t = Q_i + Q_r \text{ (I)},$$

où $Q_i$ est la teneur en coke initiale sur le catalyseur coké après craquage de la charge et $Q_t$ ou Delta coke est la teneur en coke brûlé par combustion totale ou partielle, nécessaire au maintien du bilan thermique du procédé et au maintien du catalyseur régénéré à une température supérieure ou égale à 690°C, de préférence variant de 690°C à 750°C, ledit effluent cokant comprenant une teneur en composés aromatiques supérieure à 50% poids et comprenant 20% en poids ou plus de composés poly-aromatiques.

2. Procédé selon la revendication 1, **caractérisé en ce que** $Q_t$ est choisie variant de 0,5 à 1,4% poids.

3. Procédé selon l'une des revendications précédentes, **caractérisé en ce que** soit $Q_t$ est choisie variant de 0,5 à 1% poids lorsque le régénérateur ne comprend qu'un seul étage de régénération, soit $Q_t$ est choisie variant de 0,8 à 1,4 % poids pour une combustion partielle dans le premier étage d'un régénérateur multi-étagé comprenant au moins deux étapes de régénération.

4. Procédé selon l'une des revendications précédentes, **caractérisé en ce que** l'effluent cokant est choisi parmi les effluents aromatiques issus de la réaction de craquage principal de température d'ébullition supérieure ou égale à 220°C comme le LCO, le HCO et le slurry, les fuels lourds, les coupes intermédiaires issues de la distillation atmosphérique ou de la distillation sous vide comme les résidus de distillation, ou encore des coupes aromatiques issues de la conversion du pétrole brut, la biomasse issue de la conversion du bois et/ou de la cellulose, du coke de pétrole ou de biomasse broyé dispersé ou pulvérisé dans un fluide, les coupes riches en asphalte provenant d'unités de désalphatage, les cires issues de la liquéfaction du charbon par voie indirecte (GTL) ou du procédé Fischer Tropsch de transformation du gaz en hydrocarbures, le coke de pétrole, ou un mélange des dites coupes.

5. Procédé selon l'une des revendications précédentes, **caractérisé en ce que** la charge introduite à l'étape de craquage est choisie dans le groupe composé par les purges d'unité d'hydrocraqueur, les coupes gazoles de la distillation sous vide de point d'ébullition supérieur ou égal à 350°C, de carbone Conradson inférieur ou égal à 0,1 % poids et de teneur en hydrogène supérieure ou égale à 12,7% poids, les huiles végétales, les paraffines issues du procédé Fischer Tropsch, ces charges étant craquées seules ou en mélange.

6. Procédé selon l'une des revendications précédentes, **caractérisé en ce que** l'effluent cokant est recyclé au moins une fois durant l'étape de stripage, dans une zone de recycle comprenant des grains de catalyseur cokés en phase dense.

7. Procédé selon l'une des revendications précédentes, **caractérisé en ce que** le dit effluent est recyclé dans au moins une zone de recycle dans laquelle une phase dense de catalyseur coké de l'étape de stripage est rendue homogène par insertion d'au moins un élément de garnissage structuré situé en amont de la dispersion du dit recycle par rapport au flux de grains de catalyseur et couvrant tout ou partie de la section de la dite zone de stripage et sur au moins une partie de la hauteur de celle-ci, de façon étagée ou non, les zones de recycle de coupes cokantes étant optionnellement séparées par des zones de stripage, une ou plusieurs zones de recycle puis une zone de stripage, la dernière zone avant l'envoi au régénérateur du catalyseur étant toujours dédiée au stripage.

8. Procédé selon la revendication 7, **caractérisé en ce que** l'étape de stripage comprend au moins deux zones comprenant des éléments de garnissage structuré, au moins une première zone de cokage recycle occupée par au moins un premier élément de garnissage structuré en amont de la dispersion du recycle et au moins une seconde zone de stripage occupée par au moins un deuxième élément de garnissage structuré en aval de la dispersion du dit recycle mais en amont de la dispersion du fluide de stripage.

9. Procédé selon l'une des revendications précédentes, **caractérisé en ce que** les éléments de garnissage structuré occupent moins de 10% de la surface de la section de passage dans la capacité dans laquelle ils sont placés, bien qu'en projection sur celle-ci ils en occupent toute la surface.

10. Procédé selon l'une des revendications précédentes, **caractérisé en ce que** une zone de pré-stripage équipée d'au moins un élément de garnissage structuré et d'un moyen de dispersion d'un fluide de pré-strippage est installée en amont d'une première zone de recycle de l'effluent cokant.

11. Dispositif de mise en oeuvre du procédé selon l'une des revendications 1 à 10 comprenant au moins un réacteur principal et éventuellement au moins un réacteur secondaire, au moins un désengageur et un stripeur, un régénérateur mono ou multi-étagé **caractérisé en ce que** le stripeur contient au niveau du lit dense de catalyseur, au moins une zone équipée d'au moins un élément de garnissage structuré disposé en amont d'un dispositif de dispersion de la coupe cokante par rapport à la circulation du flux des grains de catalyseur et **en ce que** ces éléments de garnissage structuré sont formés par un enchevêtrement de plaques, de ruban ou d'ailettes constituant un tamis, ce tamis occupant moins de 10% de la surface de la section de passage dans la capacité dans laquelle il est placé, mais recouvrant en projection sur celle-ci toute sa surface, les dispositifs de dispersion de recycle et de stripage étant optionnellement choisis parmi les injecteurs à cannes pulvérisant, les injecteurs d'atomisation sous pression à venturi, les anneaux de fluidisation et les tubes d'aspersion.

12. Dispositif selon la revendication 11, **caractérisé en ce que** le stripeur contient au moins deux zones équipées d'éléments de garnissage structuré associés à deux dispositifs de dispersion de fluides, l'un pour la dispersion de coupes cokantes, l'autre pour la dispersion du fluide de stripage, ces dispositifs étant situés en aval des dits éléments de garnissage structuré par rapport au flux des grains de catalyseur.

13. Dispositif selon l'une des revendications 11 ou 12, **caractérisé en ce que** le stripeur est situé dans une même capacité que le désengageur.

14. Dispositif selon l'une des revendications 11 ou 12, **caractérisé en ce que** le stripeur est situé dans une capacité distincte en aval du désengageur, mais toujours disposé en amont du régénérateur, le désengageur et/ou le stripeur comprenant optionnellement respectivement au niveau de la sortie du dit désengageur et/ou de l'entrée des grains de catalyseur dans le dit stripeur au moins un élément de garnissage structuré suivi d'un dispositif de dispersion de fluides de stripage pour le pré-stripage des grains de catalyseur.

15. Dispositif selon l'une des revendications 11 à 14, **caractérisé en ce que** lorsque le stripeur comprend une pluralité d'éléments de garnissage structuré pour le recycle et le stripage intercalés, chaque élément de garnissage structuré étant associé à un dispositif de dispersion de fluides, les volumes occupés pour le recycle et le stripage sont respectivement de 25 à 65% et de 35 à 75% du volume de la zone ou capacité de stripage.

**Patentansprüche**

1. Verfahren zum katalytischen Kracken einer schwach verkokenden Charge von Conradson-Kohlenstoff von weniger als oder gleich 0,1 Gew.-% und mit einem Wasserstoffgehalt von mehr als oder gleich 12,7 Gew.-% in der Wirbelschicht, umfassend mindestens einen Schritt des Krackens der Charge in Gegenwart eines Katalysators, einen Schritt des Abtrennens/Strippings der Abläufe der verkokten Katalysatorkörner und einen Schritt des Regenerierens der Körner durch partielle oder vollständige Verbrennung des Kokses, und Recycling eines sogenannten verkokenden kohlenstoffhaltigen und/oder kohlenwasserstoffhaltigen Ablaufs auf einen homogen verteilten und schwach verkokten Katalysator vor der Regeneration, wobei das Verfahren **dadurch gekennzeichnet ist, dass** die Menge des auf den verkokten Katalysator gespritzten Verkokungsablaufs so eingestellt wird, dass eine zusätzliche Menge an Koks $Q_r$ auf dem Katalysator bereitgestellt wird und die folgende Gleichung (I) erfüllt ist:

$$Q_t = Q_i + Q_r \text{ (I)},$$

wobei $Q_i$ der anfängliche Koksgehalt auf dem verkokten Katalysator nach dem Kracken der Charge und $Q_t$ oder Delta-Koks der Koksgehalt ist, der durch vollständige oder partielle Verbrennung verbrannt wird, was notwendig ist, um die Wärmebilanz des Prozesses aufrechtzuerhalten und den regenerierten Katalysator auf einer Temperatur von 690 °C oder mehr, vorzugsweise im Bereich von 690 °C bis 750 °C zu halten, wobei der Koksablauf einen Gehalt an aromatischen Verbindungen von mehr als 50 Gew.-% umfasst und 20 Gew.-% oder mehr polyaromatische Verbindungen umfasst.

2. Verfahren nach Anspruch 1, **dadurch gekennzeichnet, dass** Qt aus dem Bereich von 0,5 bis 1,4 Gew.-% ausgewählt ist.

3. Verfahren nach einem der vorhergehenden Ansprüche, **dadurch gekennzeichnet, dass** entweder Qt aus dem Bereich von 0,5 bis 1 Gew.-% ausgewählt ist, wenn der Regenerator nur eine einzige Regenerationsstufe umfasst, oder dass Qt für eine partielle Verbrennung in der ersten Stufe eines mehrstufigen Regenerators, der mindestens zwei Regenerationsstufen umfasst, aus dem Bereich von 0,8 bis 1,4 Gew.-% ausgewählt ist.

4. Verfahren nach einem der vorhergehenden Ansprüche, **dadurch gekennzeichnet, dass** der Koksablauf aus aromatischen Abläufen, die aus der Hauptkrackreaktion mit einer Siedetemperatur von mehr als oder gleich 220 °C resultieren, wie LCO, HCO und Slurry, Schweröl, Zwischenfraktionen, die aus der atmosphärischen Destillation oder Vakuumdestillation resultieren, wie Destillationsrückstände, oder auch aromatischen Fraktionen aus der Umwandlung von Rohöl, Biomasse aus der Umwandlung von Holz und/oder Cellulose, Petrolkoks oder gemahlener Biomasse, die in einem Fluid verteilt oder pulverisiert ist, asphaltreichen Fraktionen aus Deasphaltierungsanlagen, Wachsen aus der indirekten Kohleverflüssigung (GTL) oder dem Fischer-Tropsch-Verfahren zur Umwandlung von Gas in Kohlenwasserstoffe, Petrolkoks oder einem Gemisch dieser Fraktionen ausgewählt ist.

5. Verfahren nach einem der vorhergehenden Ansprüche, **dadurch gekennzeichnet, dass** die im Krackschritt eingeführte Charge aus der Gruppe bestehend aus Abläufen von Hydrokrackereinheiten, Gasölfraktionen der Vakuumdestillation mit Siedepunkten größer oder gleich 350 °C, mit Conradson-Kohlenstoff kleiner oder gleich 0,1 Gew.-% und mit einem Wasserstoffgehalt größer oder gleich 12,7 Gew.-%, Pflanzenölen, Paraffinen aus dem Fischer-Tropsch-Verfahren ausgewählt ist, wobei diese Chargen einzeln oder in Mischung gekrackt werden.

6. Verfahren nach einem der vorhergehenden Ansprüche, **dadurch gekennzeichnet, dass** der Koksablauf mindestens einmal während des Schritts des Strippings in eine Recyclingzone recycelt wird, die verkokte Katalysatorkörner in dichter Phase umfasst.

7. Verfahren nach einem der vorhergehenden Ansprüche, **dadurch gekennzeichnet, dass** der Ablauf in mindestens einer Recyclingzone recycelt wird, in der eine dichte verkokte Katalysatorphase des Schritts des Strippings homogenisiert wird, indem mindestens ein strukturiertes Füllkörperelement eingeführt wird, das der Verteilung des Recyclats in Bezug auf den Strom von Katalysatorkörnern vorgelagert angeordnet ist und den Abschnitt der Strippingzone ganz oder teilweise und über mindestens einen Teil ihrer Höhe, stufenweise oder nicht, bedeckt, wobei die Recyclingzonen der Verkokungsfraktionen gegebenenfalls durch Strippingzonen, eine oder mehrere Recyclingzonen und dann eine Strippingzone getrennt sind, wobei die letzte Zone vor dem Schicken des Katalysators zum Regenerator stets eine dem Stripping gewidmete Zone ist.

8. Verfahren nach Anspruch 7, **dadurch gekennzeichnet, dass** der Schritt des Strippings mindestens zwei Zonen umfasst, die strukturierte Füllkörperelemente umfassen, mindestens eine erste Verkokungsrecyclingzone, die von mindestens einem ersten strukturierten Füllkörperelement, das der Verteilung des Recyclats vorgelagert ist, eingenommen wird, und mindestens eine zweite Strippingzone, die von mindestens einem zweiten strukturierten Füllkörperelement, das der Verteilung des Recyclats nachgelagert, aber der Verteilung des Strippingfluids vorgelagert ist, eingenommen wird.

9. Verfahren nach einem der vorhergehenden Ansprüche, **dadurch gekennzeichnet, dass** die strukturierten Füllkörperelemente weniger als 10 % der Oberfläche des Durchgangsabschnitts in dem Raum einnehmen, in dem sie angeordnet sind, obwohl sie in Projektion darauf die gesamte Oberfläche einnehmen.

10. Verfahren nach einem der vorhergehenden Ansprüche, **dadurch gekennzeichnet, dass** eine Vorstrippingzone mit mindestens einem strukturierten Füllkörperelement und einem Mittel zum Verteilen eines Vorstrippingfluids einer ersten Recyclingzone für Koksablauf vorgelagert installiert ist.

11. Vorrichtung zur Durchführung des Verfahrens nach einem der Ansprüche 1 bis 10, umfassend mindestens einen Hauptreaktor und eventuell mindestens einen Sekundärreaktor, mindestens eine Trennvorrichtung und einen Stripper, einen ein- oder mehrstufigen Regenerator, **dadurch gekennzeichnet, dass** der Stripper auf Höhe des dichten Katalysatorbetts mindestens eine Zone enthält, die mit mindestens einem strukturierten Füllkörperelement ausgestattet ist, das der Verteilvorrichtung der Verkokungsfraktion in Bezug auf die Zirkulation des Stromes der Katalysatorkörner vorgelagert angeordnet ist, und dadurch, dass diese strukturierten Füllkörperelemente durch ein Gewirr aus Platten, Bändern oder Rippen gebildet sind, die ein Sieb bilden, wobei dieses Sieb weniger als 10 % der Oberfläche des Durchgangsabschnitts in dem Raum einnimmt, in dem es platziert ist, aber in Projektion darauf seine gesamte Oberfläche bedeckt, wobei die Verteilvorrichtungen des Recyclings und des Strippings gegebenenfalls aus Sprühstabinjektoren, Zerstäubungsinjektoren unter Venturi-Druck, Fluidisierungsringen und Sprührohren ausgewählt sind.

12. Vorrichtung nach Anspruch 11, **dadurch gekennzeichnet, dass** der Stripper mindestens zwei Zonen enthält, die mit strukturierten Füllkörperelementen ausgestattet sind, die zwei Fluidverteilvorrichtungen zugeordnet sind, von denen die eine zum Verteilen von Koksfraktionen und die andere zum Verteilen des Strippingfluids dient, wobei diese Vorrichtungen den strukturierten Füllkörperelementen in Bezug auf den Strom der Katalysatorkörner nachgelagert angeordnet sind.

13. Vorrichtung nach einem der Ansprüche 11 oder 12, **dadurch gekennzeichnet, dass** der Stripper in einem gleichen Raum wie die Trennvorrichtung angeordnet ist.

14. Vorrichtung nach einem der Ansprüche 11 oder 12, **dadurch gekennzeichnet, dass** der Stripper in einem separaten Raum der Trennvorrichtung nachgelagert angeordnet ist, aber immer dem Regenerator vorgelagert angeordnet ist, wobei die Abziehvorrichtung und/oder der Stripper gegebenenfalls jeweils auf Höhe des Ausgangs der Trennvorrichtung und/oder des Eingangs der Katalysatorkörner in den Stripper mindestens ein strukturiertes Füllkörperelement, gefolgt von einer Strippingfluidverteilvorrichtung zum Vorstripping der Katalysatorkörner umfassen.

15. Vorrichtung nach einem der Ansprüche 11 bis 14, **dadurch gekennzeichnet, dass**, wenn der Stripper eine Vielzahl von geschachtelten strukturierten Füllkörperelementen zum Recyceln und Strippen umfasst, jedes strukturierte Füllkörperelement einer Fluidverteilvorrichtung zugeordnet ist, wobei die zum Recyceln und Strippen benötigten Volumina jeweils 25 bis 65 % und 35 bis 75 % des Volumens der Stripperzone oder des Stripperraums betragen.

## Claims

1. A method for fluidised bed catalytic cracking of a low-coking feedstock with no more than 0.1% by weight of Conradson carbon and with a hydrogen content no higher than 12.7% by weight, comprising at least one step of cracking the feedstock in the presence of a catalyst, a step of separating/stripping the effluents from the coked catalyst particles and a step of regenerating said grains by partial or total combustion of the coke, and recycling same over homogeneously distributed and slightly coked catalyst, before regenerating at least one carbonaceous and/or hydrocarbon coking effluent, the method being **characterised in that** the amount of coking effluent injected onto the coked catalyst is adjusted to provide an additional amount of coke $Q_r$ on the catalyst and to satisfy the following equation (I):

$$Q_t = Q_i + Q_r \; (I),$$

wherein Qi is the initial coke content on the coked catalyst after cracking the feedstock and Qt or Delta coke is the coke content burned by total or partial combustion, necessary to maintain the thermal balance of the process and to keep the regenerated catalyst at a temperature no lower than 690°C, preferably ranging from 690°C to 750°C, said coking effluent comprising an aromatic content of more than 50% by weight and comprising 20% by weight or more of polyaromatic compounds.

2. The method according to claim 1, **characterised in that** Qt is chosen to vary from 0.5 to 1.4% by weight.

3. The method according to one of the preceding claims, **characterised in that** either Qt is chosen to vary from 0.5 to 1% by weight when the regenerator comprises only one regeneration stage, or Qt is chosen to vary from 0.8 to 1.4% by weight for partial combustion in the first stage of a multi-stage regenerator comprising at least two regeneration steps.

4. The method according to one of the preceding claims, **characterised in that** the coking effluent is chosen from aromatic effluents resulting from the main cracking reaction with a boiling point no lower than 220°C, such as LCO, HCO and slurry, heavy fuels, intermediate fractions from atmospheric distillation or vacuum distillation such as distillation residues, or aromatic fractions from the conversion of crude oil, biomass resulting from the conversion of wood and/or cellulose, petroleum or milled biomass coke dispersed or sprayed into a fluid, asphalt-rich fractions from deasphalting units, waxes from indirect coal liquefaction (GTL) or from the Fischer-Tropsch process for transforming gas into hydrocarbons, petroleum coke, or a mixture of said fractions.

**5.** The method according to one of the preceding claims, **characterised in that** the feedstock injected in the cracking stage is chosen from the group consisting of hydrocracking unit purges, diesel fuel fractions from vacuum distillation with a boiling point no lower than 350°C, with no more than 0.1% by weight of Conradson carbon and hydrogen content no lower than 12.7% by weight, vegetable oils, and paraffins from the Fischer-Tropsch process, these feedstocks being cracked alone or as a mixture.

**6.** The method according to one of the preceding claims, **characterised in that** the coking effluent is recycled at least once during the stripping step, in a recycling zone comprising coked catalyst grains in the dense phase.

**7.** The method according to one of the preceding claims, **characterised in that** said effluent is recycled in at least one recycling zone in which a dense phase of coked catalyst from the stripping step is homogenised by inserting at least one structured packing element located upstream of the dispersion of said recycling with respect to the flow of catalyst grains and covering all or part of the section of said stripping zone and over at least a part of the height thereof, optionally in a staged manner, the recycling zones of coking fractions optionally being separated by stripping zones, one or more recycling zones and then a stripping zone, the last zone before sending the catalyst to the regenerator always being dedicated to stripping.

**8.** The method according to claim 7, **characterised in that** the stripping step comprises at least two zones comprising structured packing elements, at least one first recycling coking zone occupied by at least one first structured packing element upstream of the dispersion of the recycling and at least a second stripping zone occupied by at least one second structured packing element downstream of the dispersion of said recycling but upstream of the dispersion of the stripping fluid.

**9.** The method according to one of the preceding claims, **characterised in that** the structured packing elements occupy less than 10% of the area of the passage section in the capacity in which they are placed, although in projection thereon they occupy the entire surface.

**10.** The method according to one of the preceding claims, **characterised in that** a pre-stripping zone equipped with at least one structured packing element and a means for dispersing a pre-stripping fluid is installed upstream of a first recycling zone of the coking effluent.

**11.** A device for implementing the method according to one of claims 1 to 10, comprising at least one main reactor and optionally at least one secondary reactor, at least one disengager and a stripper, and a single- or multi-stage regenerator, **characterised in that** the stripper contains, in the dense catalyst bed, at least one zone equipped with at least one structured packing element arranged upstream of a device for dispersing the coking fraction with respect to the circulation of the flow of catalyst grains and **in that** these structured packing elements are formed by an entanglement of plates, band or fins constituting a sieve, this sieve occupying less than 10% of the surface of the passage section in the capacity in which it is placed, but in projection thereon covering the entire surface thereof, the recycling and stripping dispersing devices being optionally chosen among pulverising nozzle injectors, Venturi pressurised atomising injectors, fluidising rings and spraying tubes.

**12.** The device according to claim 11, **characterised in that** the stripper contains at least two zones equipped with structured packing elements associated with two fluid-dispersion devices, one for dispersing coking fractions and the other for dispersing the stripping fluid, these devices being located downstream of said structured packing elements with respect to the flow of the catalyst grains.

**13.** The device according to one of claims 11 or 12, **characterised in that** the stripper is placed in the same capacity as the disengager.

**14.** The device according to one of claims 11 or 12, **characterised in that** the stripper is placed in a separate capacity downstream of the disengager, but always arranged upstream of the regenerator, the disengager and/or the stripper optionally including, at the outlet of said disengager and/or at the intake of the catalyst particles into said stripper, respectively, at least one structured packing element followed by a stripping fluid dispersion device for pre-stripping the catalyst grains.

15. The device according to one of claims 11 to 14, **characterised in that** when the stripper comprises a plurality of interspersed structured packing elements for recycling and stripping, each structured packing element being associated with a fluid-dispersion device, the volumes occupied for recycling and stripping are 25 to 65% and 35 to 75%, respectively, of the volume of the stripping capacity or zone.

FIG.1

FIG.2

FIG.3

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3856659 A
- US 4888103 A
- EP 2072605 A
- EP 719850 A
- US 7022221 B
- US 7077997 B
- WO 2007094771 A
- WO 0035575 A
- CN 1763150